# EUROPEAN PATENT SPECIFICATION

(11) **EP 2 410 660 B1**
(45) Date of publication and mention of the grant of the patent: **26.06.2013**
(21) Application number: 10006652.1
(22) Date of filing: 28.06.2010
(51) Int. Cl.: H04B 1/28

(54) **Method for eliminating blocking signals at the reception chain by adjusting the frequency of the local oscillator**
Verfahren zum Eliminieren von blockierenden Signalen in der Empfangskette durch Anpassen der Frequenz des lokalen Oszillators
Méthode pour éliminer les interférences dans la chaîne de réception par un réglage de la fréquence de l'oscillateur local

(43) Date of publication of application: 25.01.2012
(73) Proprietor: Alcatel Lucent, 75007 Paris (FR)
(72) Inventor: Martens, Henning, 71254 Ditzingen (DE)
(74) Representative: Wetzel, Emmanuelle

(56) References cited:
- WO-A1-2008/148125
- US-B1- 6 219 531

## Description

### Field of the invention

The invention relates to multicarrier receivers in a wireless telecommunication network, more specifically to a multicarrier receiver being operable in a single carrier mode.

### Background and related art

According to 3GPP technical specifications (3GPP TS 45.005 Chapter 5 and the TS 51.021 Chapter 7) a receiver has to fulfill higher performance demands as a single carrier receiver than as a multicarrier receiver.

A multicarrier receiver comprises a multicarrier filter. A multicarrier filter has a wider passband than a single carrier filter, which is used in a single carrier receiver. Hence, the single carrier filter filters out more blocking signals than the multicarrier filter. A blocking signal is understood herein according to 3GPP specifications as a signal with a significantly higher signal power than the wanted signal. The wanted signal may for example be a signal sent from a user equipment of the wireless telecommunication network to the receiver. The blocking signal is not intended to be received by the multicarrier receiver.

If the blocking signal is not filtered out by the respective filter, the automatic gain control of the receiver decreases the gain because the blocking signal has such a high signal power. The result is that the wanted signal is also only amplified with the reduced gain. In this case, the performance of the receiver decreases.

WO 2008/148125 A1 discloses a set and a method of eliminating or reducing interference resulting from harmonics of local oscillator frequencies of mixers. US 6,219,531 B1 discloses an architecture and frequency plan for a wideband UHF radio minimizing spurious output signal emission that uses a low value for the ratio of the maximum RF operating frequency to the intermediate frequency in the radio, as part of its internal superheterodyne conversion process.

### Summary

It is an object of the present invention to provide an improved multicarrier receiver in a wireless telecommunication network, an improved computer readable storage medium for such a multicarrier receiver, an improved base station apparatus, and an improved computer readable storage medium for such a base station apparatus. These objects are achieved by the multicarrier receiver, the computer readable storage medium, the base station apparatus, and the computer readable storage medium according to the independent claims. Embodiments of the invention are given in the dependent claims.

The invention provides a multicarrier receiver in a wireless telecommunication network. Preferably the multicarrier receiver is located in a base station of the wireless telecommunication network. The multicarrier receiver comprises receiving means for receiving a radio frequency spectrum. The radio frequency spectrum comprises a radio frequency signal with a radio frequency. The radio frequency signal is the wanted signal. The multicarrier receiver further comprises a local oscillator for generating a local oscillator frequency signal. The local oscillator frequency signal has a local oscillator frequency. The multicarrier receiver furthermore comprises a mixer for mixing the radio frequency signal with the local oscillator frequency signal to an intermediate frequency signal. The multicarrier receiver further comprises signal processing means for processing the intermediate frequency signal. Signal processing for example may comprise analyzing the intermediate frequency signal, extracting data from the intermediate frequency signal or converting or mixing the intermediate frequency signal to another frequency, for example a baseband frequency.

The multicarrier receiver furthermore comprises a filter for filtering the intermediate frequency spectrum such that only a sub-spectrum of the intermediate frequency spectrum is processed by the signal processing means. The sub-spectrum has a lowest sub-spectrum frequency, wherein the frequency difference between the lowest sub-spectrum frequency and the local oscillator frequency is fixed. The frequency difference between the local oscillator frequency and the central frequency of the sub-spectrum is also fixed, because the sub-spectrum has a fixed range. The frequency difference between the local oscillator frequency and the central sub-spectrum frequency is in general called intermediate frequency. The radio frequency of the radio frequency signal lies in the sub-spectrum. The sub-spectrum is the passband of the filter.

The multicarrier receiver comprises blocking signal detection means for detecting a frequency of a blocking signal within the sub-spectrum. The multicarrier receiver furthermore comprises local oscillator frequency adjusting means for adjusting the local oscillator frequency such that the frequency of the blocking signal lies outside the sub-spectrum of the radio frequency spectrum. It is to be noted that the radio frequency of the radio frequency signal still lies inside the sub-spectrum. This adjustment of the local oscillator frequency is advantageous because the automatic gain control of the multicarrier receiver does no longer trigger on the blocking signal. The blocking signal is filtered out by the filter because it lies outside the sub-spectrum. The automatic gain control of the multicarrier receiver triggers on the radio frequency signal, which is a signal received from a user equipment and contains data, which was sent by the user equipment to the multicarrier receiver. A user equipment may for example be a wireless terminal such as a mobile phone, a mobile computer or a PDA.

In other words, the performance of the multicarrier receiver in single carrier mode is improved by moving the sub-spectrum such that the radio frequency still lies inside the sub-spectrum and the frequency of the blocking signal lies outside the sub-spectrum. The sub-spectrum is moved by moving the local oscillator frequency. This is possible because the difference between the lowest sub-spectrum frequency and the local oscillator frequency and the range of the sub-spectrum are fixed. Thus, by moving the local oscillator frequency the sub-spectrum is also moved.

This method is advantageous because a multicarrier receiver with a multicarrier filter has a performance high enough to be operated as a single carrier receiver according to 3GPP specifications. There is no need for having multicarrier and single carrier components in the receiver. Multicarrier mode is performed by the multicarrier receiver according to state of the art techniques. When switching to single carrier mode, the multicarrier receiver is operated according to embodiments of the invention.

According to embodiments of the invention the blocking signal detection means are adapted for detecting a received signal as a blocking signal, if the signal power of the received signal is above a signal power threshold. A blocking signal usually has a significantly higher signal power than the received radio frequency signal. The radio frequency signal is a signal being intended to be received by the multicarrier receiver, because it contains data to be processed by the signal processing means. For example, the radio frequency signal is a signal sent by a user equipment to a base station, wherein the base station comprises the multicarrier receiver. The blocking signal may then be a signal being sent from another user equipment to another base station. Thus, the blocking signal should preferably not be processed by the multicarrier receiver. When a blocking signal is received by the multicarrier receiver it is advantageous to filter out the blocking signal, because the automatic gain control of the multicarrier receiver decreases the gain because of the high signal power of the blocking signal. This results in a reduced gain for the radio frequency signal. By filtering out the blocking signal the automatic gain control triggers on the radio frequency signal and the radio frequency signal is amplified with a higher gain than in the case, when the blocking signal is not filtered out. Thus, filtering out the blocking signal leads to a better sensitivity.

According to embodiments of the invention the multicarrier receiver comprises means for storing a first blocking signal frequency of a first blocking signal, if the first blocking signal frequency is detected more often than a detection threshold. This is advantageous, when a first blocking signal is detected regularly within the sub-spectrum. This could be for example the case, when this blocking signal frequency is used by a neighboring base station. By storing the first blocking signal frequency the multicarrier filter avoids for future local oscillator frequency adjustments that the first blocking signal frequency lies inside the sub-spectrum.

According to embodiments of the invention the local oscillator frequency adjusting means are adapted for adjusting the local oscillator frequency such that the first blocking signal frequency lies outside the sub-spectrum of the radio frequency spectrum, when a second blocking signal with a second blocking signal frequency is detected by the blocking signal detection means. In other words, the local oscillator frequency adjusting means set the local oscillator frequency such that the first blocking signal frequency lies outside the sub-spectrum. When a second blocking signal with a second blocking signal frequency is detected by the blocking signal detection means this second blocking signal frequency is not taken into account by the local oscillator frequency adjusting means for adjusting the local oscillator frequency as long as the first blocking signal is present.

According to embodiments of the invention the local oscillator frequency adjusting means are adapted for adjusting the local oscillator frequency such that a second blocking signal frequency of a second blocking signal lies outside the sub-spectrum of the radio frequency spectrum, when the second blocking signal is detected by the blocking signal detection means. In other words, the local oscillator frequency adjusting means adjusts the local oscillator frequency such that the second blocking signal frequency lies outside the sub-spectrum. The first blocking signal frequency is ignored for this decision. This means, that the first blocking signal frequency may in this case lie inside the sub-spectrum.

According to embodiments of the invention the receiver further comprises detection means for detecting if the frequency of the blocking signal is higher or lower than the radio frequency of the radio frequency signal. When the frequency of the blocking signal is higher than the radio frequency of the radio frequency signal, the local oscillator adjusting means decrease the local oscillator frequency such that the blocking signal lies outside the sub-spectrum. When the frequency of the blocking signal is lower than the radio frequency of the radio frequency signal, the local oscillator frequency adjusting means increase the local oscillator frequency such that the blocking signal lies outside the sub-spectrum.

According to embodiments of the invention the local oscillator frequency adjusting means adjust the local oscillator frequency in a first timeslot such that the frequency of the blocking signal is lower than the lowest sub-spectrum frequency. The local oscillator frequency adjusting means adjusts the local oscillator frequency in a second timeslot such that the frequency of the blocking signal is higher than the highest sub-spectrum frequency. The highest sub-spectrum frequency is the highest frequency in the sub-spectrum.

This is advantageous for filtering out in a first timeslot a first blocking signal with a first blocking signal frequency lower than the radio frequency and in a second timeslot a second blocking signal frequency of a second blocking signal, wherein the second blocking signal frequency is higher than the radio frequency.

In another aspect the invention relates to a computer readable storage medium containing instructions that when executed by a multicarrier receiver according to embodiments of the invention cause the multicarrier receiver to perform the method of adjusting a local oscillator frequency. The method comprises receiving a radio frequency spectrum. The radio frequency spectrum comprises a radio frequency signal with a radio frequency. The method further comprises generating a local oscillator frequency signal. The local oscillator frequency signal has a local oscillator frequency. In a third step the radio frequency signal is mixed with the local oscillator frequency signal to an intermediate frequency signal. The intermediate frequency signal is processed by signal processing means.

The intermediate frequency spectrum is filtered such that only a sub-spectrum of the intermediate frequency spectrum is processed by the signal processing means. The sub-spectrum has a low sub-spectrum frequency and the frequency difference between the low sub-spectrum frequency and the local oscillator frequency is fixed. A frequency of a blocking signal is detected within the sub-spectrum. The local oscillator frequency is adjusted such that the frequency of the blocking signal lies outside the sub-spectrum of the radio frequency spectrum.

In another aspect the invention relates to a base station apparatus comprising a multicarrier receiver according to embodiments of the invention.

In yet another aspect the invention relates to a computer readable storage medium containing instructions that when executed by a base station apparatus according to embodiments of the invention cause the base station apparatus to perform a method of adjusting a local oscillator frequency according to embodiments of the invention.

### Brief description of the drawings

In the following embodiments of the invention are explained in greater detail, by way of example only, making reference to the drawings in which:
- Figure 1: is a schematic graph of a blocking signal with a blocking signal frequency lower than the radio frequency,
- Figure 2: is a schematic graph of a blocking signal with a blocking signal frequency higher than the radio frequency, and
- Figure 3: is a block diagram of a base station with a multicarrier receiver according to embodiments of the invention.

### Detailed description

Like numbered elements in these Figs. are either identical elements or perform the same function. Elements which have been discussed previously will not necessarily be discussed in later Figs. if the function is identical.

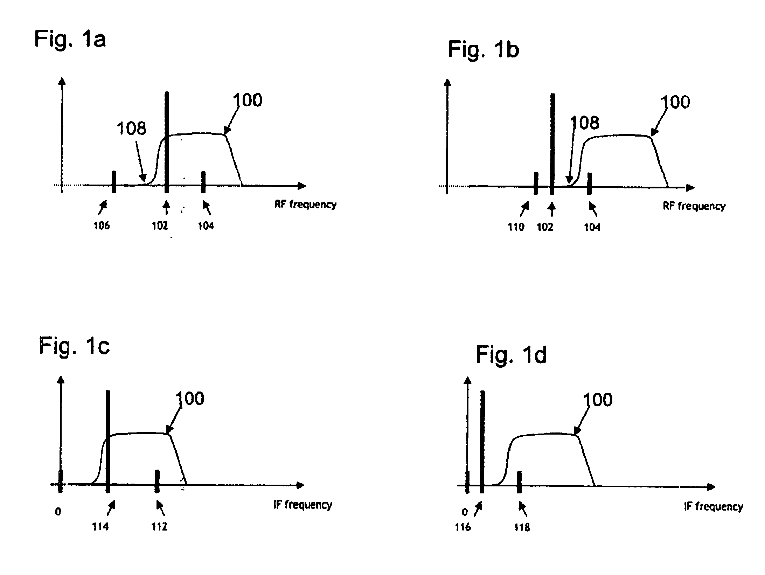

Fig. 1 is a schematic graph of a blocking signal, a radio frequency signal, a sub-spectrum, and a local oscillator frequency. The x-axis of the graph is a frequency spectrum in the radio frequency band and the y-axis is the signal power. A sub-spectrum 100 of the frequency spectrum is the passband of a filter. The sub-spectrum 100 comprises a blocking signal frequency of a blocking signal 102 and the radio frequency of a radio frequency signal 104. The signal power of the blocking signal 102 is significantly higher than the signal power of the radio frequency signal 104. Fig. 1 a further shows a local oscillator frequency signal 106 with a local oscillator frequency.

The sub-spectrum 100 has a lowest sub-spectrum frequency 108. The difference between the frequency of the local oscillator signal 106 and the lowest sub-spectrum frequency 108 is fixed. When the frequency of the local oscillator signal 106 is changed, the lowest sub-spectrum frequency 108 is changed by the same value. The same applies for the whole sub-spectrum 100. Moving the frequency of the local oscillator signal 106 results always in moving the sub-spectrum 100 by the same frequency value.

Fig. 1b is a schematic graph of the sub-spectrum 100, the blocking signal 102, the radio frequency signal 104, and a new adjusted local oscillator signal 110. From Fig. 1a to Fig. 1b the local oscillator signal's frequency has been adjusted to a higher frequency. In other words, the frequency of the local oscillator signal 110 in Fig. 1b is higher than the frequency of local oscillator signal 106 in Fig. 1a. This adjustment of the local oscillator frequency results in an adjustment of the sub-spectrum 100 because of the fixed difference between the local oscillator frequency and the lowest sub-spectrum frequency 108. In other words, in comparison with Fig. 1 a the local oscillator frequency, the lowest sub-spectrum frequency 108 and the sub-spectrum 100 are each moved towards a higher frequency value. Thereby, the blocking signal 102 lies outside sub-spectrum 100. Thus, blocking signal 102 is filtered out, because sub-spectrum 100 is the passband of a filter of the multicarrier receiver. Thus, blocking signal 102 does not influence signal processing and/or the automatic gain control of the multicarrier receiver.

Fig. 1c corresponds to the situation of Fig. 1 a after mixing the local oscillator signal 106 with the radio frequency signal 104. In other words, the Figs. 1 a and 1 b correspond to the radio frequency band in the multicarrier receiver, while Figs. 1c and 1d correspond to the intermediate frequency band in the multicarrier receiver.

The mixer of the multicarrier receiver mixes each signal inside sub-spectrum 100 with local oscillator signal 106. Thus, departing from Fig. 1a, the blocking signal 102 and the radio frequency signal 104 are mixed with local oscillator signal 106. Because the whole sub-spectrum 100 is mixed with local oscillator signal 106, the mixed blocking signal 114 in Fig. 1c and the mixed radio frequency signal 112 in Fig. 1c are still located inside sub-spectrum 100.

Fig. 1d is the graph showing the respective signals departing from Fig. 1b after mixing each frequency inside sub-spectrum 100 with local oscillator signal 110. Because blocking signal 102 in Fig. 1b lies outside sub-spectrum 100, the mixed blocking signal 116 in Fig. 1d also lies outside sub-spectrum 100. Thus, also in the intermediate frequency band in Fig. 1d only the mixed radio frequency signal 118 lies inside sub-spectrum 100. Thus, signal processing in the intermediate frequency band in the multicarrier receiver is performed only on the mixed radio frequency signal, which could also be referred to as an intermediate frequency signal. The automatic gain control of the multicarrier receiver triggers on the intermediate frequency signal and not on blocking signal 116.

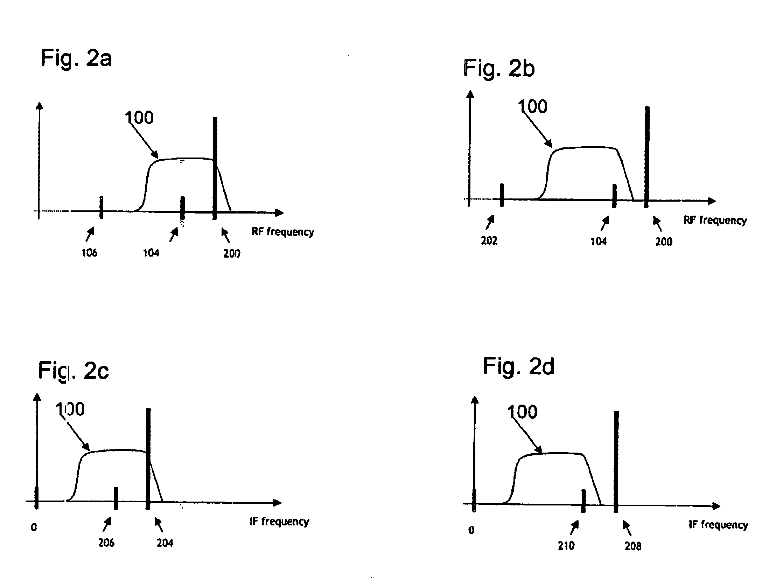

Fig. 2a is a graph similar to Fig. 1a. The difference to Fig. 1a is that the frequency of blocking signal 200 is higher than the frequency of the radio frequency signal 104. In Fig. 2b the frequency of local oscillator signal 106 has been decreased such that new local oscillator signal 202 has a lower frequency than local oscillator signal 106. Correspondingly to Fig. 1b, by shifting the frequency of the local oscillator signal 106 to a lower frequency the sub-spectrum is also moved to lower frequencies. This results in the fact that in Fig. 2b the frequency of the blocking signal 200 lies outside sub-spectrum 100. This is advantageous because blocking signal 200 is filtered out by the filter of the multicarrier receiver.

It is to be noted that the principles of Figs. 1 and 2 are the same. The only difference is that in Fig. 1 the frequency of the blocking signal 102 is lower than the frequency of radio frequency signal 104, while in Fig. 2 the frequency of blocking signal 200 is higher than the frequency of radio frequency signal 104. This results in the fact that the frequency of the local oscillator signal 106 has to be shifted in Fig. 1 to a higher frequency local oscillator signal 110, while in Fig. 2b the frequency of local oscillator signal 202 is lower than the frequency of local oscillator frequency signal 106.

Correspondingly to Fig. 1, Figs 2c and 2d show the situation in the intermediate frequency band of the multicarrier receiver after mixing the local oscillator signal 106 and 202 respectively with radio frequency signal 104. As already explained above for Fig. 1c the mixed blocking signal 204 still lies inside sub-spectrum 100 in Fig. 2c. This is unwanted because blocking signal 204 influences signal processing of intermediate frequency signal 206, which is the result of mixing local oscillator frequency signal 106 with radio frequency signal 104.

In Fig. 2d the situation is shown with the shifted local oscillator signal 202. The mixed blocking signal 208 still lies outside sub-spectrum 100 because blocking signal 200 lies outside sub-spectrum 100. The mixed radio frequency signal 104 also referred to as intermediate frequency signal 210 lies inside sub-spectrum 100 and can be processed by signal processing means in the intermediate frequency band of the multicarrier receiver.

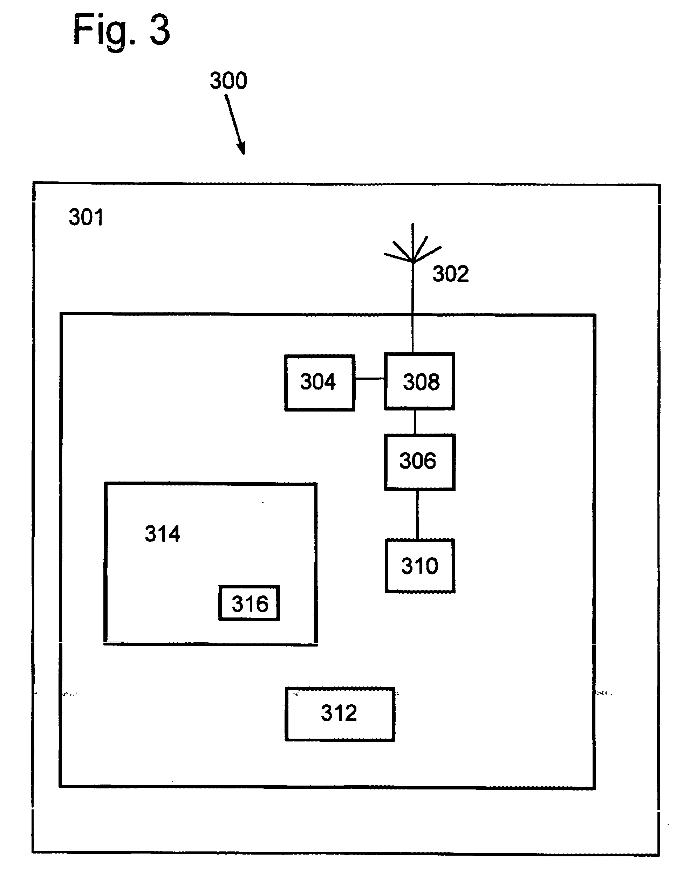

Fig. 3 is a block diagram of a base station apparatus 300 comprising a multicarrier receiver 301. The multicarrier receiver 301 comprises receiving means 302 for receiving a radio frequency spectrum. The multicarrier receiver 301 further comprises a local oscillator 304 for generating a local oscillator frequency signal, a filter 306 for filtering the intermediate frequency spectrum such that only a sub-spectrum of the intermediate frequency spectrum is processed by signal processing means 310. Before signal processing is performed by signal processing means 310 the received radio frequency spectrum, which comprises a radio frequency signal, is mixed with the local oscillator signal in mixer 308 to an intermediate frequency signal. The intermediate frequency signal is then filtered by filter 306 such that only a sub-spectrum of the intermediate frequency spectrum is processed by signal processing means 310.

The multicarrier receiver 301 further comprises a processor 312, which is adapted for executing a program 316, which is stored in a data storage 314. By executing program 316 the processor 312 is adapted for detecting blocking signals within the sub-spectrum. The processor is further adapted for adjusting the local oscillator frequency of the local oscillator 304 such that the frequency of the blocking signal lies outside the sub-spectrum of the radio frequency spectrum.

### List of reference numerals

| | |
|---|---|
| 100 | Sub-spectrum |
| 102 | Blocking signal |
| 104 | Radio frequency signal |
| 106 | Local oscillator signal |
| 108 | Lowest sub-spectrum frequency |
| 110 | Local oscillator signal |
| 112 | Mixed radio frequency signal |
| 114 | Mixed blocking signal |
| 116 | Mixed blocking signal |
| 118 | Mixed radio frequency signal |
| 200 | Blocking signal |
| 202 | Local oscillator signal |
| 204 | Mixed blocking signal |
| 206 | Mixed radio frequency signal |
| 208 | Mixed blocking signal |
| 210 | Intermediate frequency signal |
| 300 | Base station |
| 301 | Multicarrier receiver |
| 302 | Receiving means |
| 304 | Local oscillator |
| 306 | Filter |
| 308 | Mixer |
| 310 | Signal processing means |
| 312 | Processor |
| 314 | Storage |
| 316 | Program |

## Claims

1. Multicarrier receiver (301) in a wireless telecommunication network, the multicarrier receiver comprising:
- receiving means (302) for receiving a radio frequency, RF, spectrum, the RF spectrum comprising a radio frequency signal (104), the radio frequency signal having a radio frequency (104) that lies inside a sub-spectrum of the RF spectrum;
- a local oscillator (304) for generating a local oscillator frequency signal (106; 110; 202), the local oscillator frequency signal having a local oscillator frequency;
- a mixer (308) for mixing the radio frequency signal with the local oscillator frequency signal to an intermediate frequency signal (112; 118; 206; 210);
- signal processing means (310) for processing the intermediate frequency signal;
- a filter (306) for filtering the intermediate frequency spectrum such that only a sub-spectrum (100) of the intermediate frequency spectrum is processed by the signal processing means, wherein the sub-spectrum of the RF spectrum has a lowest sub-spectrum frequency (108), wherein the frequency difference between the lowest sub-spectrum frequency of the RF spectrum and the local oscillator frequency is fixed;
- blocking signal detection means (312) for detecting a frequency of a blocking signal (102; 116; 200) within the sub-spectrum of the RF spectrum;
- local oscillator frequency adjusting means (312) for adjusting the local oscillator frequency such that the frequency of the blocking signal lies outside the sub-spectrum of the radio frequency spectrum and the radio frequency of the radio frequency signal still lies inside the sub-spectrum of the RF spectrum.

2. Multicarrier receiver according to claim 1, wherein the blocking signal detection means are adapted for detecting a received signal as a blocking signal, if the signal power of the received signal is above a signal power threshold.

3. Multicarrier receiver according to any one of the preceding claims, wherein the receiver comprises means (314) for storing a first blocking signal frequency of a first blocking signal, if the first blocking signal frequency is detected more often than a detection threshold.

4. Multicarrier receiver according to claim 3, wherein the local oscillator frequency adjusting means are adapted for adjusting the local oscillator frequency such that the first blocking signal frequency lies outside the sub-spectrum of the radio frequency spectrum, when a second blocking signal with a second blocking signal frequency is detected by the blocking signal detection means.

5. Multicarrier receiver according to claim 3, wherein the local oscillator frequency adjusting means are adapted for adjusting the local oscillator frequency such that a second blocking signal frequency of a second blocking signal lies outside the sub-spectrum of the radio frequency spectrum, when the second blocking signal is detected by the blocking signal detection means..

6. Multicarrier receiver according to any one of the preceding claims, wherein the receiver further comprises detection means for detecting, if the frequency of the blocking signal is higher or lower than the radio frequency of the radio frequency signal.

7. Multicarrier receiver according to any one of the preceding claims, wherein the local oscillator frequency adjusting means adjust the local oscillator frequency in a first time slot such that the frequency of the blocking signal is lower than the lowest sub-spectrum frequency, and wherein the local oscillator frequency adjusting means adjust the local oscillator frequency In a second time slot such that the frequency of the blocking signal is higher than the highest sub-spectrum frequency.

8. Computer-readable storage medium (314) containing instructions that when executed by a multicarrier receiver according to any one of the preceding claims cause the multicarrier receiver to perform a method of adjusting a local oscillator frequency, the method comprising:
- receiving a radio frequency, RF, spectrum, the RF spectrum comprising a radio frequency signal, the radio frequency signal having a radio frequency (104) that lies inside a sub-spectrum of the RF spectrum;
- detecting a frequency of a blocking signal within the sub-spectrum of the RF spectrum;
- generating a local oscillator frequency signal, the local oscillator frequency signal having a local oscillator frequency;
- adjusting the local oscillator frequency such that the frequency of the blocking signal lies outside the sub-spectrum of the radio frequency spectrum and the radio frequency of the radio frequency signal still lies Inside the sub-spectrum of the RF spectrum; wherein the sub-spectrum of the RF spectrum has a lowest sub-spectrum frequency, wherein the frequency difference between the lowest sub-spectrum frequency of the RF spectrum and the local oscillator frequency is fixed;
- mixing the radio frequency signal with the local oscillator frequency signal to an intermediate frequency signal;
- filtering the intermediate frequency spectrum such that only a sub-spectrum of the intermediate frequency spectrum is processed by the signal processing means;
- processing the intermediate frequency signal.

9. Base station apparatus (300) comprising a multicarrier receiver according to any one of the claims 1-7.

10. Computer-readable storage medium (314) containing instructions that when executed by a base station apparatus according to claim 9 cause the base station apparatus to perform a method of adjusting a local oscillator frequency, the method comprising:
- receiving a radio frequency, RF, spectrum, the RF spectrum comprising a radio frequency signal, the radio frequency signal having a radio frequency (104) that lies inside a sub-spectrum of the RF spectrum;
- detecting a frequency of a blocking signal within the sub-spectrum of the RF spectrum;
- generating a local oscillator frequency signal, the local oscillator frequency signal having a local oscillator frequency;
- adjusting the local oscillator frequency such that the frequency of the blocking signal lies outside the sub-spectrum of the radio frequency spectrum and the radio frequency of the radio frequency signal still lies inside the sub-spectrum of the RF spectrum, wherein the sub-spectrum has a lowest sub-spectrum frequency, wherein the frequency difference between the lowest sub-spectrum frequency of the RF spectrum and the local oscillator frequency is fixed;
- mixing the radio frequency signal with the local oscillator frequency signal to an intermediate frequency signal;
- filtering the intermediate frequency spectrum such that only a sub-spectrum of the intermediate frequency spectrum is processed by the signal processing means;
- processing the intermediate frequency signal.

## Patentansprüche

1. Mehrträger-Empfänger (301) in einem Telekommunikationsnetzwerk, wobei der Mehrträger-Empfänger umfasst:
- Empfangsmittel (302) zum Empfangen eines Funkfrequenz- bzw. RF-Spektrums, wobei das RF-Spektrum ein Funkfrequenzsignal (10a) umfasst, wobei das Funkfrequenzsignal eine Funkfrequenz (104) aufweist, die innerhalb eines Tellspektrums des RF-Spektrums liegt;
- einen lokalen Oszillator (304) zum Erzeugen eines Frequenzsignals des lokalen Oszillators (106; 110; 202), wobei das Frequenzsignal des lokalen Oszillators eine Frequenz des lokalen Oszillators aufweist;
- einen Mischer (308) zum Mischen des Funkfrequenzsignals mit einem Frequenzsignal des lokalen Oszillators zu einem Zwischenfrequenzsignal (112; 118; 206; 210);
- Signalverarbeitungsmittel (310) zum Verarbeiten des Zwischenfrequenzsignals;
- einen Filter (306) zum Filtern des Zwischenfrequenzspektrums, so dass nur ein Teilspektrum (100) des Zwischenfrequenzspektrums von den Signalverarbeitungsmitteln verarbeitet wird, wobei das Teilspektrum des RF-Spektrums eine kleinste Teilspektrum-Frequenz (108) aufweist, wobei die Frequenzdifferenz zwischen der kleinsten Teilspektrum-Frequenz des RF-Spektrums und der Frequenz des lokalen Oszillators eine feste Differenz ist;
- Verriegelungssignalerlassungsmittel (312) zum Erfassen einer Frequenz eines Verriegelungssignals (102; 116; 200) innerhalb des Teilspektrums des RF-Spektrums;
- Mittel zum Anpassen der Frequenz des lokalen Oszillators (312), um die Frequenz des lokalen Oszillators derart anzupassen, dass die Frequenz des Verriegelungssignals außerhalb des Tellspektrums des Funkfrequenzspektrums liegt und die Funkfrequenz des Funkfrequenzsignals nach wie vor Innerhalb des Teilspektrums des RF-Spektrums liegt.

2. Mehrträger-Empfänger nach Anspruch 1, wobei die Verriegelungssignalerfassungsmittel dazu ausgelegt sind, ein empfangenes Signal als ein Verriegelungssignal zu erfassen, wenn die Signalleistung des empfangenen Signals einen Signalleistungsgrenzwert überschreitet.

3. Mehrträger-Empfänger nach einem beliebigen der vorstehenden Ansprüche, wobei der Empfänger Mittel (314) zum Speichern einer ersten Verriegelungssignalfrequenz eines ersten Verriegelungssignals, wenn die erste Verriegelungssignalfrequenz öfter erfasst wird als ein Erfassungsgrenzwert, umfasst.

4. Mehrträger-Empfänger nach Anspruch 3, wobei die Mittel zum Anpassen der Frequenz des lokalen Oszillators dazu ausgelegt sind, die Frequenz des lokalen Oszillators derart anzupassen, dass die erste Verriegelungssignalfrequenz außerhalb des Tellspektrums des Funkfrequenzspektrums liegt, wenn ein zweites Verriegelungssignal mit einer zweiten Verriegelungssignalfrequenz von den Verriegelungssignalerfassungsmitteln erfasst wird.

5. Mehrträger-Empfänger nach Anspruch 3, wobei die Mittel zum Anpassen der Frequenz des lokalen Oszillators dazu ausgelegt sind, die Frequenz des lokalen Oszillators derart anzupassen, dass eine zweite Verriegelungssignalfrequenz eines zweiten Verriegelungssignals außerhalb des Teilspektrums des Funkfrequenzspektrums liegt, wenn das zweite Verriegelungssignal von den Verriegelungssignalerfassungsmitteln erfasst wird.

6. Mehrträger-Empfänger nach einem beliebigen der vorstehenden Ansprüche, wobei der Empfänger weiterhin Erfassungsmittel umfasst, um zu erfassen, ob die Frequenz des Verriegelungssignals größer oder kleiner als die Funkfrequenz des Funkfrequenzsignals ist.

7. Mehrträger-Empfänger nach einem beliebigen der vorstehenden Ansprüche, wobei die Mittel zum Anpassen der Frequenz des lokalen Oszillators die Frequenz des lokalen Oszillators In einem ersten Zeitschlitz derart anpassen, dass die Frequenz des Verriegelungssignals kleiner als die kleinste Teilspektrum-Frequenz Ist, und wobei die Mittel zum Anpassen der Frequenz des Oszillators die Frequenz des lokalen Oszillators in einem zweiten Zeitschlitz derart anpassen, dass die Frequenz des Verriegelungssignals höher als die höchste Teilspektrum-Frequenz ist.

8. Computerlesbares Speichermedium (314) mit Befehlen, welche, wenn sie von einem Mehrträger-Empfänger gemäß einem beliebigen der vorstehenden Ansprüche ausgeführt werden, bewirken, dass der Mehrträger-Empfänger ein Verfahren zur Anpassung der Frequenz eines lokalen Oszillators durchführt, wobei das Verfahren umfasst:
- Empfangen eines Funkfrequenz- bzw. RF-Spektrums, wobei das RF-Spektrum ein Funkfrequenzsignal umfasst, wobei das Funkfrequenzsignal eine Funkfrequenz (104) aufweist, die innerhalb eines Teilspektrums des RF-Spektrums liegt;
- Erfassen einer Frequenz eines Verriegelungssignals Innerhalb des Teilspektrums des RF-Spektrums;
- Erzeugen eines Frequenzsignals des lokalen Oszillators, wobei das Frequenzsignal des lokalen Oszillators eine Frequenz des lokalen Oszillators aufweist;
- Anpassen der Frequenz des lokalen Oszillators, so dass die Frequenz des Verriegelungssignals außerhalb des Teilspektrums des Funkfrequenzspektrums liegt und die Funkfrequenz des Funkfrequenzsignals nach wie vor innerhalb des Teilspektrums des RF-Spektrums liegt, wobei das Teilspektrum des RF-Spektrums eine kleinste Teilspektrum-Frequenz aufweist, wobei die Frequenzdifferenz zwischen der kleinsten Teilspektrum-Frequenz des RF-Spektrums und der Frequenz des lokalen Oszillators eine feste Differenz ist;
- Mischen des Funkfrequenzsignals mit einem Frequenzsignal des lokalen Oszillators zu einem Zwischenfrequenzsignal;
- Filtern des Zwischenfrequenzspektrums, so dass nur ein Tellspektrum des Zwischenfrequenzspektrums von den Signalverarbeltungsmitteln verarbeitet wird;
- Verarbeiten des Zwischenfrequenzsignals.

9. Basisstationsvorrichtung (300) mit einem Mehrträger-Empfänger gemäß einem beliebigen der Ansprüche 1-7.

10. Computerlesbares Speichermedium (314) mit Befehlen, welche, wenn sie von einer Basisstationsvorrichtung gemäß Anspruch 9 ausgeführt werden, bewirken, dass die Basisstationsvorrichtung ein Verfahren zur Anpassung der Frequenz eines lokalen Oszillators durchführt, wobei das Verfahren umfasst:
- Empfangen eines Funkfrequenz- bzw. RF-Spektrums, wobei das RF-Spektrum ein Funkfrequenzsignal umfasst, wobei das Funkfrequenzsignal eine Funkfrequenz (104) aufweist, die innerhalb eines Teilspektrums des RF-Spektrums liegt;
- Erfassen einer Frequenz eines Verriegelungssignals Innerhalb des Teilspektrums des RF-Spektrums;
- Erzeugen eines Frequenzsignals des lokalen Oszillators, wobei das Frequenzsignal des lokalen Oszillators eine Frequenz des lokalen Oszillators aufweist;
- Anpassen der Frequenz des lokalen Oszillators, so dass die Frequenz des Verriegelungssignals außerhalb des Teilspektrums des Funkfrequenzspektrums liegt und die Funkfrequenz des Funkfrequenzsignals nach wie vor innerhalb des Teilspektrums des RF-Spektrums liegt, wobei das Teilspektrum des RF-Spektrums eine kleinste Tellspektrum-Frequenz aufweist, wobei die Frequenzdifferenz zwischen der kleinsten Teilspektrum-Frequenz des RF-Spektrums und der Frequenz des lokalen Oszillators eine feste Differenz Ist;
- Mischen des Funkfrequenzsignals mit dem Frequenzsignal des lokalen Oszillators zu einem Zwischenfrequenzsignal;
- Filtern des Zwischenfrequenzspektrums, so dass nur ein Teilspektrum des Zwischenfrequenzspektrums von den Signalverarbeitungsmitteln verarbeitet wird;
- Verarbeiten des Zwischenfrequenzsignals.

## Revendications

1. Récepteur multiporteuse (301) dans un réseau de télécommunication sans fil, le récepteur de multiporteuse comprenant :
- des moyens de réception (302) pour recevoir un spectre des radiofréquences, RF, le spectre RF comprenant un signal de radiofréquence (104), le signal de radiofréquence présentant une radiofréquence (104) à l'intérieur d'un spectre secondaire du spectre RF ;
- un oscillateur local (304) pour générer un signal de fréquence d'oscillateur local (106 ; 110 ; 202), le signal de fréquence d'oscillateur local présentant une fréquence d'oscillateur local ;
- un mélangeur (308) pour mélanger le signal de radiofréquence au signal de fréquence d'oscillateur local pour obtenir un signal de fréquence intermédiaire (112 ; 118 ; 206 ; 210) ;
- des moyens de traitement de signal (310) pour traiter le signal de fréquence intermédiaire ;
- un filtre (306) pour filtrer le spectre de fréquences intermédiaires de sorte qu'un seul spectre secondaire (100) du spectre de fréquences intermédiaires soit traité par les moyens de traitement de signal, dans lequel le spectre secondaire du spectre RF présente la fréquence de spectre secondaire la plus faible (108), dans lequel la différence de fréquence entre la fréquence de spectre secondaire la plus faible du spectre RF et la fréquence d'oscillateur local est fixe ;
- des moyens de détection de signal de blocage (312) pour détecter une fréquence d'un signal de blocage (102 ; 116 ; 200) à l'intérieur du spectre secondaire du spectre RF ;
- des moyens de réglage de la fréquence d'oscillateur local (312) pour régler la fréquence d'oscillateur local de sorte que la fréquence du signal de blocage soit à l'extérieur du spectre secondaire du spectre des radiofréquences et que la radiofréquence du signal de radiofréquence soit toujours à l'intérieur du spectre secondaire du spectre RF.

2. Récepteur multiporteuse selon la revendication 1, dans lequel les moyens de détection de signal de blocage sont adaptés pour détecter un signal reçu en tant que signal de blocage, si la puissance de signal du signal reçu est supérieure à un seuil de puissance de signal.

3. Récepteur multiporteuse selon l'une quelconque des revendications précédentes, dans lequel le récepteur comprend des moyens (314) pour stocker une première fréquence de signal de blocage d'un premier signal de blocage, si la première fréquence de signal de blocage est détectée plus souvent qu'un seuil de détection.

4. Récepteur multiporteuse selon la revendication 3, dans lequel les moyens de réglage de la fréquence d'oscillateur local sont adaptés pour régler la fréquence d'oscillateur local de sorte que la première fréquence de signal de blocage soit à l'extérieur du spectre secondaire du spectre des radiofréquences, lorsqu'un deuxième signal de blocage avec une deuxième fréquence de signal de blocage est détecté par les moyens de détection de signal de blocage.

5. Récepteur multiporteuse selon la revendication 3, dans lequel les moyens de réglage de la fréquence d'oscillateur local sont adaptés pour régler la fréquence d'oscillateur local de sorte qu'une deuxième fréquence de signal de blocage d'un deuxième signal de blocage soit à l'extérieur du spectre secondaire du spectre des radiofréquences, lorsque le deuxième signal de blocage est détecté par les moyens de détection de signal de blocage.

6. Récepteur multiporteuse selon l'une quelconque des revendications précédentes, dans lequel le récepteur comprend en outre des moyens de détection destinés à détecter, si la fréquence du signal de blocage est supérieure ou inférieure à la radiofréquence du signal de radiofréquence.

7. Récepteur multiporteuse selon l'une quelconque des revendications précédentes, dans lequel les moyens de réglage de la fréquence d'oscillateur local règlent la fréquence d'oscillateur local dans un premier créneau temporel de sorte que la fréquence du signal de blocage soit inférieure à la fréquence de spectre secondaire la plus faible, et dans lequel les moyens de réglage de la fréquence d'oscillateur local règlent la fréquence d'oscillateur local dans un deuxième créneau temporel de sorte que la fréquence du signal de blocage soit supérieure à la fréquence de spectre secondaire la plus élevée.

8. Support de stockage lisible par ordinateur (314) contenant des instructions qui, lorsqu'elles sont exécutées par un récepteur multiporteuse selon l'une quelconque des revendications précédentes, entraînent l'exécution par le récepteur multiporteuse d'un procédé de réglage d'une fréquence d'oscillateur local, le procédé comprenant les étapes suivantes :
- recevoir un spectre des radiofréquences, RF, le spectre RF comprenant un signal de radiofréquence, le signal de radiofréquence présentant une radiofréquence (104) à l'intérieur d'un spectre secondaire du spectre RF ;
- détecter une fréquence d'un signal de blocage à l'intérieur du spectre secondaire du spectre RF ;
- générer un signal de fréquence d'oscillateur local, le signal de fréquence d'oscillateur local présentant une fréquence d'oscillateur local ;
- régler la fréquence d'oscillateur local de sorte que la fréquence du signal de blocage soit à l'extérieur du spectre secondaire du spectre des radiofréquences et que la radiofréquence du signal de radiofréquence soit toujours à l'intérieur du spectre secondaire du spectre RF ; dans lequel le spectre secondaire du spectre RF présente la fréquence de spectre secondaire la plus faible, dans lequel la différence de fréquence entre la fréquence de spectre secondaire la plus faible du spectre RF et la fréquence d'oscillateur local est fixe ;
- mélanger la signal de radiofréquence au signal de fréquence d'oscillateur local pour obtenir un signal de fréquence intermédiaire ;
- filtrer le spectre de fréquences intermédiaires de sorte qu'un seul spectre secondaire du spectre de fréquences intermédiaires soit traité par les moyens de traitement de signal ;
- traiter le signal de fréquence Intermédiaire.

9. Appareil de station de base (300) comprenant un récepteur multiporteuse selon l'une quelconque des revendications 1 à 7.

10. Support de stockage lisible par ordinateur (314) contenant des instructions qui, lorsqu'elles sont exécutées par un appareil de station de base selon la revendication 9, entraînent l'exécution par l'appareil de station de base d'un procédé de réglage d'une fréquence d'oscillateur local, le procédé comprenant les étapes suivantes :
- recevoir un spectre des radiofréquences, RF, le spectre RF comprenant un signal de radiofréquence, le signal de radiofréquence présentant une radiofréquence (104) à l'intérieur d'un spectre secondaire du spectre RF ;
- détecter une fréquence d'un signal de blocage à l'intérieur du spectre secondaire du spectre RF ;
- générer un signal de fréquence d'oscillateur local, le signal de fréquence d'oscillateur local présentant une fréquence d'oscillateur local ;
- régler la fréquence d'oscillateur local de sorte que la fréquence du signal de blocage soit à l'extérieur du spectre secondaire du spectre des radiofréquences et que la radiofréquence du signal de radiofréquence soit toujours à l'intérieur du spectre secondaire du spectre RF ; dans lequel le spectre secondaire du spectre RF présente la fréquence de spectre secondaire la plus faible, dans lequel la différence de fréquence entre la fréquence de spectre secondaire la plus faible du spectre RF et la fréquence d'oscillateur local est fixe ;
- mélanger le signal de radiofréquence au signal de fréquence d'oscillateur local pour obtenir un signal de fréquence intermédiaire ;
- filtrer le spectre de fréquences intermédiaires de sorte qu'un seul spectre secondaire du spectre de fréquences intermédiaires soit traité par les moyens de traitement de signal ;
- traiter le signal de fréquence intermédiaire.
